# EUROPÄISCHE PATENTSCHRIFT

(11) **EP 1 687 160 B1**
(45) Veröffentlichungstag und Bekanntmachung des Hinweises auf die Patenterteilung: **01.04.2009**
(21) Anmeldenummer: 04790241.6
(22) Anmeldetag: 09.10.2004
(51) Int. Cl.: B60G 17/052

(54) **LUFTFEDERUNGSEINRICHTUNG FÜR EIN FAHRZEUG**
PNEUMATIC SUSPENSION UNIT FOR A VEHICLE
SYSTEME DE SUSPENSION PNEUMATIQUE POUR VEHICULE

(30) Priorität: 19.11.2003 DE 10354057; 22.07.2004 DE 102004035691
(43) Veröffentlichungstag der Anmeldung: 09.08.2006
(73) Patentinhaber: WABCO GmbH, 30453 Hannover (DE)
(72) Erfinder: STENDER, Axel, 31787 Hameln (DE); RISSE, Rainer, 30982 Pattensen (DE); LUCAS, Johann, 31319 Sehnde (DE); WITTE, Norbert, 31867 Lauenau (DE)
(74) Vertreter: Schrödter, Manfred
(86) Internationale Anmeldenummer: PCT/EP2004/011321
(87) Internationale Veröffentlichungsnummer: WO 2005/049345

(56) Entgegenhaltungen:
- EP-A- 0 779 167
- EP-A- 1 382 469
- DE-B- 1 218 239
- GB-A- 2 237 780
- US-A- 4 627 597
- US-A- 5 443 093
- US-A1- 2002 079 626
- US-A1- 2002 096 840

## Beschreibung

Die Erfindung betrifft eine Luftfederungseinrichtung für ein Fahrzeug gemäß dem Oberbegriff des Patentanspruchs 1.

Eine gattungsgemäße Luftfederungseinrichtung ist aus der EP 0 779 167 B1 bekannt.

Eine solche Luftfederungseinrichtung beinhaltet eine elektronisch gesteuerte Niveauregelungseinrichtung. Die elektronische Steuerung der Niveauregelungseinrichtung hat beispielsweise gegenüber konventionellen, rein pneumatisch betriebenen Luftfederventilen den Vorteil komfortablerer Regelung und größerer Funktionsvielfalt. Infolge der elektronischen Steuerung benötigt eine Luftfederungsanlage der gattungsgemäßen Art jedoch eine Stromversorgung, um seine bestimmungsgemäßen Funktionen auszuführen, wie etwa ein durch manuelle Betätigung von Bedienelementen bewirktes Anheben oder Absenken des Fahrzeugaufbaus, z.B. um ein Laderampen-Niveau zu erreichen. Eine solche Stromversorgung ist bei einem zwecks Be- oder Entladens abgestellten Fahrzeug nicht immer vorhanden. Insbesondere bei separat, d. h. ohne Zugfahrzeug, abgestellten Anhängefahrzeugen ist mangels bordeigener Batterie eine Stromversorgung der elektronischen Niveauregelungseinrichtung nicht ohne weiteres möglich.

Das Dokument GB 2 237 780 A offenbart ein Luftfederungssystem für ein Lastfahrzeug mit Luftfedern, einer Höhensteuereinrichtung, die an Luftfedern angeschlossen und pneumatisch mit einer Druckluftversorgung verbindbar ist, einer ersten Ventileinrichtung, wodurch die Höhensteuereinrichtung im Betrieb übersteuert oder umgangen werden kann, um die Höhe der Ladefläche des Fahrzeugs relativ zu einer Fahrzeugachse ausgehend von einer normalen Fahrhöhe zu verändern. Die erste Ventileinrichtung ist über eine zweite Ventileinrichtung an die Luftfedern angeschlossen; die zweite Ventileinrichtung weist eine erste und eine zweite Betriebsbedingung auf und ist an die Höhensteuerventileinrichtung gekoppelt, wodurch bei der ersten Bedingung die Luftfedern über die Höhensteuerventileinrichtung aufgeblasen/abgelassen werden können.

Das Dokument US 2002/0096840 A1 offenbart eine Steueranlage zum Heben und Senken des Fahrzeugaufbaus von luftgefederten Fahrzeugen mit Niveauregelung, mit einer Druckluftquelle, mindestens einem Niveauregelventil, mindestens einer Fahrzeugachse zugeordneten Luftfederbälgen, die zur Einregelung eines Sollabstandes zwischen Fahrzeugaufbau und Fahrzeugachse durch das zugeordnete Niveauregelventil mit der Druckluftquelle oder einem drucklosen Auslass verbindbar sind. Des Weiteren offenbart das Dokument ein den Abstand zwischen Fahrzeugaufbau und Fahrzeugachse erfassenden und ein entsprechendes elektrisches Signal abgebenden Wegsensor, eine Schaltventilanordnung mit den Stellungen Heben, Senken, Fahrt und Stop und eine elektronische Steuereinrichtung zur Steuerung der Schaltventilanordnung entsprechend dem von dem Wegsensor abgegebenen elektrischen Signal. Zwischen der Druckluftquelle und den Luftfederbälgen sind zwei parallele Leitungszweige vorgesehen. Das Niveauregelventil ist in einem der beiden Leitungszweige angeordnet. In einem oder in beiden parallelen Leitungszweigen ist je ein Sperrventil angeordnet, das einerseits elektrisch und andererseits über eine Feder in zwei Stellungen schaltbar ist, wobei in der durch die Feder eingeschalteten Stellung der das Niveauregelventil aufweisende Leitungszweig und in der elektrisch eingeschalteten Stellung der andere Leitungszweig freigeschaltet wird.

Der Erfindung liegt daher die Aufgabe zugrunde, eine Luftfederungseinrichtung für ein Fahrzeug anzugeben, bei dem für die Niveauregelung zwar eine elektronische Steuerung vorgesehen ist, jedoch auch bei abgeschalteter oder fehlender Stromversorgung eine Niveauveränderung des Fahrzeugaufbaus möglich ist.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, bei relativ wenig zusätzlichem Aufwand im Vergleich zu bekannten Luftfederungseinrichtungen mit einer elektronisch gesteuerten Niveauregelungseinrichtung eine zuverlässige Möglichkeit zur gezielten manuellen Änderung der Niveaulage des Fahrzeugaufbaus zu ermöglichen. So ist auch bei fehlender Stromversorgung der elektronisch gesteuerten Niveauregelungseinrichtung eine Belüftung und/oder Entlüftung der Luftfederbälge der Luftfederungseinrichtung durchführbar. Ein weiterer Vorteil ist, daß insbesondere für Anhängefahrzeuge keine Notwendigkeit besteht, eine bordeigene Batterie vorzusehen oder ein abgestelltes Anhängefahrzeug auf andere Weise extern mit Strom zu versorgen.

Die Erfindung wird nachfolgend unter Nennung weiterer Vorteile anhand von Ausführungsbeispielen und unter Verwendung von Zeichnungen näher erläutert.

### Es zeigen

- Fig. 1 und 2: Ausführungsbeispiele für eine Luftfede- rungseinrichtung für ein Fahrzeug und
- Fig. 3 und 4: Ausführungsbeispiele für Teile einer elek- tronisch gesteuerten Niveauregelungsein- richtung als Bestandteil der Luftfede- rungseinrichtung und
- Fig. 5: eine weiteres Ausführungsbeispiel für eine Luftfederungseinrichtung für ein Fahrzeug, jeweils in schematischer Darstellung,
- Fig. 6 und 7: weitere Ausführungsbeispiele für Teile der Luftfederungseinrichtung.

In den Figuren werden gleiche Bezugszeichen für einander entsprechende Teile verwendet.

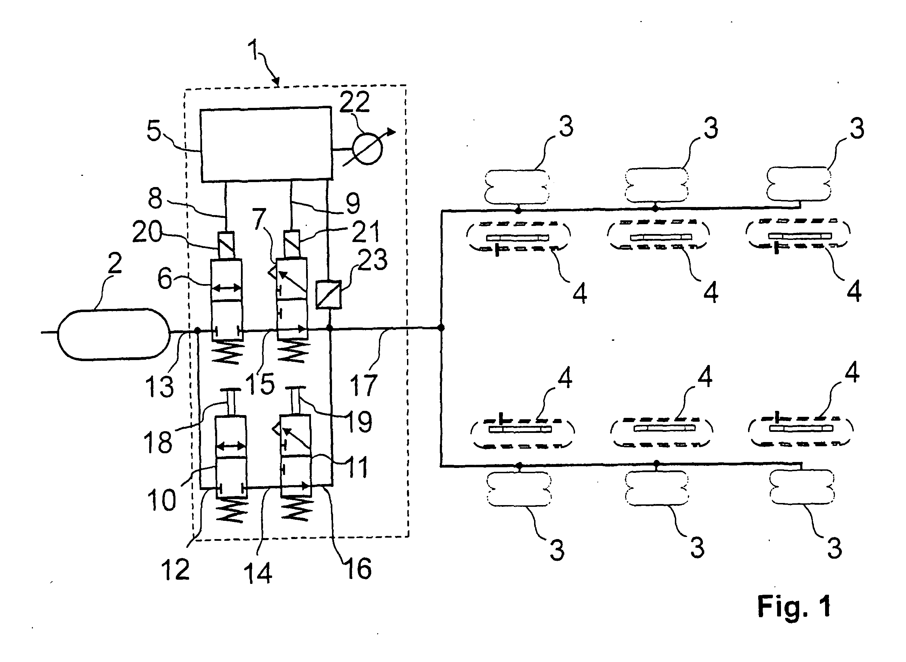

Die in der Fig. 1 dargestellte Luftfederungseinrichtung für ein Fahrzeug weist Luftfederbälge (3) auf, die in dem Fahrzeug zur Abstützung des Fahrzeugaufbaus gegenüber den Rädern (4) bzw. Achsen des Fahrzeuges vorgesehen sind. Die Luftfederungseinrichtung weist des weiteren eine elektronisch gesteuerte Niveauregelungseinrichtung (1) auf, welche zur Belüftung der Luftfederbälge (3) einen Druckluftzufluß von einer mit der Niveauregelungseinrichtung verbundenen Druckmittelquelle (2) zu den Luftfederbälgen (3) und zur Entlüftung der Luftfederbälge (3) einen Druckluftabfluß von den Luftfederbälgen (3) in die Atmosphäre steuert.

Die elektronisch gesteuerte Niveauregelungseinrichtung (1) weist zur elektronischen Steuerung ein elektronisches Steuergerät (5) auf, das von einer in der Fig. 1 nicht dargestellten elektrischen Energiequelle zu versorgen ist. Das elektronische Steuergerät (5) empfängt von einem Wegsensor (22), der zur Ermittlung des Abstands des Fahrzeugaufbaus von einem Bezugspunkt bezüglich der Räder (4) dient und somit die Niveaulage des Fahrzeugaufbaus bestimmt, ein Niveaulagensignal über eine elektrische Leitung. Des weiteren empfängt das elektronische Steuergerät (5) von einem Drucksensor (23) ein Drucksignal über eine elektrische Leitung. Der Drucksensor (23) ist mit druckseitig mit den Luftfederbälgen (3) verbunden. Das abgegebene Drucksignal gibt somit den in den Luftfederbälgen (3) vorliegenden Luftdruck an.

Das elektronische Steuergerät (5) ermittelt nach vorgegebenen Algorithmen, ob aufgrund der ermittelten Niveaulage des Fahrzeugaufbaus eine Belüftung oder eine Entlüftung der Luftfederbälge (3) erforderlich ist, um eine gewünschte Soll-Niveaulage einzuhalten, und bewirkt bei Bedarf durch Betätigung einer elektrisch betätigbaren Ventileinrichtung (6, 7) die Belüftung oder Entlüftung der Luftfederbälge (3), um die mittels des Wegsensors (22) ermittelte Niveaulage an die Soll-Niveaulage anzupassen. Die elektrisch betätigbare Ventileinrichtung (6, 7) weist zwei elektromagnetisch betätigbare Ventile (6, 7) auf, die von dem elektronischen Steuergerät (5) durch Bestromung jeweils eines Elektromagneten (20, 21) über elektrische Leitungen (8, 9) betätigbar sind.

Das als 3/2-Wegeventil ausgebildete Ventil (7) dient als kombiniertes Einlaß-/Auslaß-Ventil, welches im unbestromten Zustand des Elektromagneten (21), wie in der Fig. 1 dargestellt, eine Einlaßstellung und im bestromten Zustand des Elektromagneten (21) eine Auslaßstellung annimmt. Das als 2/2-Wegeventil ausgebildete Ventil (6) dient als Absperr-Ventil, welches im unbestromten Zustand des Elektromagneten (20), wie in der Fig. 1 dargestellt, eine Absperrstellung und im bestromten Zustand des Elektromagneten (20) eine Durchlaßstellung annimmt. Für eine Belüftung der Luftfederbälge (3) schaltet das elektronische Steuergerät (5) das Absperr-Ventil (6) in die Durchlaßstellung. Das Einlaß-/Auslaß-Ventil (7) verbleibt in der Einlaßstellung. Hierdurch wird die Druckmittelquelle (2) mit den Luftfederbälgen (3) verbunden, so daß Druckluft von der Druckmittelquelle (2) über die Druckluftleitungen (13, 15, 17) und die Ventile (6, 7) in die Luftfederbälge (3) fließen kann. Für eine Entlüftung der Luftfederbälge (3) schaltet das elektronische Steuergerät (5) das Einlaß-/Auslaß-Ventil (7) in die Auslaßstellung. Hierdurch wird die Druckmittelquelle (2) abgesperrt, und die Luftfederbälge (3) werden mit einem Entlüftungsanschluß des Einlaß-/Auslaß-Ventils (7) verbunden, so daß Druckluft von den Luftfederbälgen (3) über die Druckluftleitungen (15, 17) und das Einlaß-/Auslaß-Ventil (7) in die Atmosphäre fließen kann. Zum Halten des in den Luftfederbälgen (3) vorhandenen Luftdrucks steuert das elektronische Steuergerät (5) das Absperr-Ventil (6) in die Absperrstellung.

Bei der in der Fig. 1 dargestellten Luftfederungseinrichtung werden sämtliche Luftfederbälge (3) gemeinsam gesteuert und weisen immer denselben Druck auf. Es ist ebenfalls üblich, die Luftfederbälge zu Radgruppen oder Achsgruppen zusammenzufassen oder auch jeden Luftfederbalg einzeln zu steuern. In einem solchen Fall ist die elektronisch gesteuerte Niveauregelungseinrichtung um entsprechende Ventile zur Einzelsteuerung der Luftfederbälge bzw. der Gruppen von Luftfederbälgen zu erweitern.

Zusätzlich zu den bereits erläuterten Teilen der Luftfederungseinrichtung sind als manuelle Betätigungselemente zwei Taster (18, 19) vorgesehen, durch deren manuelle Betätigung auch bei fehlender Stromversorgung der elektronisch gesteuerten Niveauregelungseinrichtung (1) bzw. des elektronischen Steuergeräts (5) eine Belüftung und/oder Entlüftung der Luftfederbälge (3) durchführbar ist.

Gemäß einer vorteilhaften Ausgestaltung der Erfindung ist in einem zu der elektrisch betätigbaren Ventileinrichtung (6, 7) parallelen, die elektrische betätigbare Ventileinrichtung (6, 7) umgehenden Druckluftzweig (12, 14, 16) eine über die manuellen Betätigungselemente (18, 19) manuell betätigbare Ventileinrichtung (10, 11) vorgesehen. Die manuell betätigbare Ventileinrichtung (10, 11) ist vorteilhaft in Form eines pneumatischen 2/2-Wegeventile und eines pneumatischen 3/2-Wegeventils ausgebildet. Derartige Wegeventile sind einfach und kostengünstig herzustellen und sehr zuverlässig im Gebrauch.

Gemäß einer vorteilhaften Ausgestaltung der Erfindung sind die Taster (18, 19) mechanisch mit den pneumatischen Wegeventilen (10, 11) verbunden. Über die Taster (18, 19) sind die Wegeventile (10, 11) gegen die Kraft jeweils einer Rückstellfeder betätigbar. Das Wegeventil (10) dient dabei als Absperr-Ventil, welches im unbetätigten Zustand des Tasters (18), wie in der Fig. 1 dargestellt, eine Absperrstellung und im betätigten Zustand des Tasters (18) eine Durchlaßstellung annimmt. Das Wegeventil (11) dient als kombiniertes Einlaß-/Auslaß-Ventil, welches im unbetätigten Zustand des Tasters (19), wie in der Fig. 1 dargestellt, eine Einlaßstellung und betätigten Zustand des Tasters (19) eine Auslaßstellung annimmt.

Bei fehlender Stromversorgung kann eine manuelle Veränderung der Niveaulage durch Belüften bzw. Entlüften der Luftfederbälge (3) wie folgt vorgenommen werden:

Für ein Belüften wird der Taster (18) manuell betätigt, d.h. das Wegeventil (10) wird in die Durchlaßstellung gestellt. Hierdurch kann Druckluft von der Druckmittelquelle (2) über die Druckluftleitungen (12, 14, 16) durch das Wegeventil (10) sowie das im unbetätigten Zustand des Tasters (19) in der Einlaßstellung befindliche Wegeventil (11) zu den Luftfederbälgen (3) fließen.

Wird ein Halten des Luftdrucks bzw. der Niveaulage gewünscht, wird einfach der Taster (18) losgelassen, wodurch der Druckmittelfluß abgesperrt wird. Für ein Entlüften wird der Taster (19) manuell betätigt, d.h. das Wegeventil (11) wird in die Auslaßstellung gestellt. Hierdurch kann Druckluft aus den Luftfederbälgen (3) über die Druckluftleitung (16) und über einen Entlüftungsanschluß des Wegeventils (11) in die Atmosphäre ausströmen. Wird aus diesem Zustand heraus ein Halten des Luftdrucks bzw. der Niveaulage gewünscht, wird einfach der Taster (19) losgelassen.

Gemäß einer vorteilhaften Ausgestaltung der Erfindung sind die Wegeventile (10, 11) mit den übrigen Teilen der Niveauregelungseinrichtung (1) als ein gemeinsames Modul ausgebildet, beispielsweise durch bauliche Integration der Wegeventile (10, 11) und der übrigen Teile der Niveauregelungseinrichtung (1).

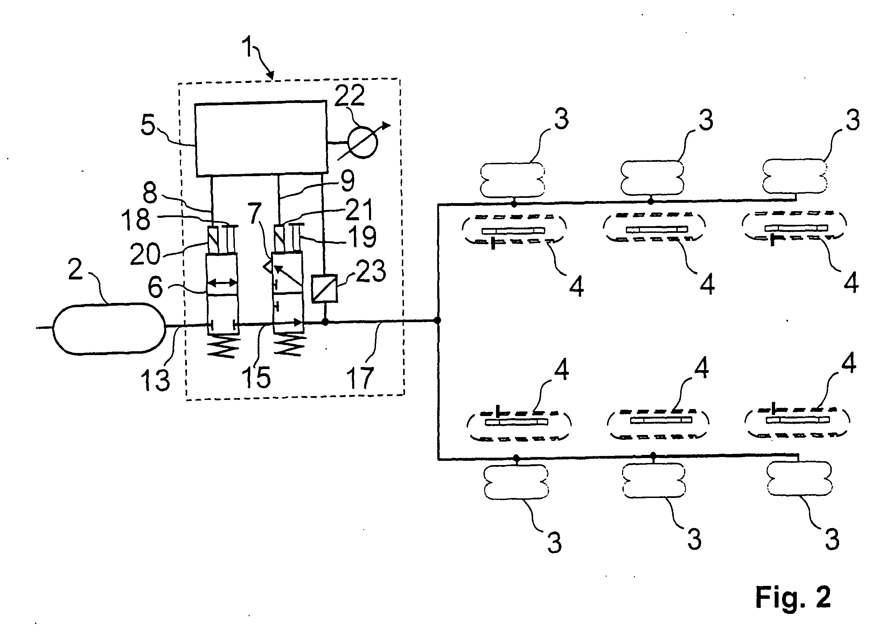

In der Fig. 2 ist eine weitere vorteilhafte Ausgestaltung der erfindungsgemäßen Luftfederungseinrichtung dargestellt, bei der die elektrisch betätigbare Ventileinrichtung (6, 7) mechanisch mit den manuellen Betätigungselementen, hier wiederum als Taster (18, 19) ausgebildet, gekoppelt ist und über die manuellen Betätigungselemente manuell betätigbar ist. Hierdurch wird eine weitere Verbesserung im Hinblick auf Kompaktheit und Herstellungskosten der Niveauregelungseinrichtung (1) erzielt. Die Ventile (6, 7) der elektrisch betätigbaren Ventileinrichtungen sind gemäß der Ausgestaltung der Fig. 2 wahlweise durch ihren jeweiligen Taster (18, 19) oder durch ihren jeweiligen Elektromagneten (20, 21) gegen Federkraft betätigbar.

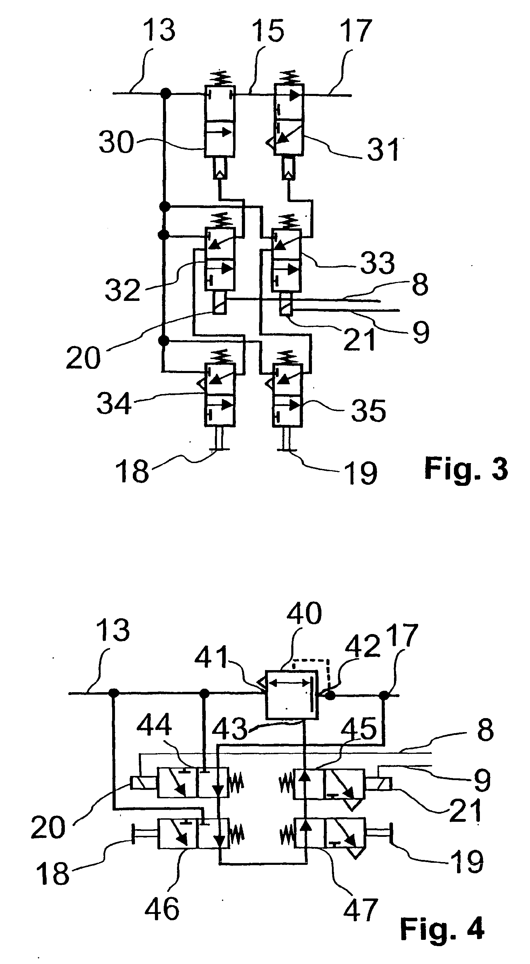

In der Fig. 3 ist eine weitere Ausgestaltung der in der Fig. 1 dargestellten Luftfederungseinrichtung dargestellt, wobei in der Fig. 3 ausschnittsweise nur der die Ventileinrichtungen betreffende Teil der elektronisch gesteuerten Niveauregelungseinrichtung (1) dargestellt ist. Die übrigen Teile der Luftfederungseinrichtung entsprechen der Fig. 1.

Gemäß Fig. 3 sind als elektrisch betätigbare Ventileinrichtung zwei 3/2-Wegeventile (32, 33) vorgesehen, die analog zu der Darstellung der Fig. 1 über Elektromagnete (20, 21) und elektrische Leitungen (8, 9) von dem elektronischen Steuergerät (5) betätigbar sind. Als manuell betätigbare Ventileinrichtung sind zwei 3/2-Wegeventile (34, 35) vorgesehen, welche über die bereits erwähnten Taster (18, 19) manuell betätigbar sind.

Gemäß einer vorteilhaften Ausgestaltung der Erfindung ist gemäß Fig. 3 zusätzlich eine Servoventileinrichtung (30, 31) zur Belüftung und/oder Entlüftung der Luftfederbälge (3) vorgesehen, wobei die Servoventileinrichtung (30, 31) wenigstens durch die elektrisch betätigbare Ventileinrichtung (32, 33) und durch manuelle Betätigung des manuellen Betätigungselements (18, 19) betätigbar ist, hier indirekt über Druckluft-Betätigung durch die Wegeventile (34, 35).

Die Servoventileinrichtung (30, 31) besteht aus einem Druckmittel-betätigbaren 2/2-Wegeventil (30) und einem ebenfalls Druckmittel-betätigbaren 3/2-Wegeventil (31). Das Ventil (30) dient als Absperr-Ventil, das Ventil (31) dient als kombiniertes Einlaß-/Auslaß-Ventil, wobei die Funktionen der Ventile (30, 31) jeweils den bezüglich der Ventile (6, 7) der Fig. 1 bereits erläuterten Funktionen entsprechen. Im Unterschied zu den Ventilen (6, 7) sind die Ventile (30, 31) über jeweilige Druckmittel-Steuereingänge durch das Druckmittel betätigbar. Das Absperr-Ventil (30) ist mit seinem Druckmittel-Steuereingang mit einem ersten Druckmittelanschluß des Ventils (32) verbunden. Das Ventil (32) weist außerdem zwei weitere Druckmittelanschlüsse auf, von denen einer mit der Druckmittelquelle (2) und der andere mit einem ersten Druckmittelanschluß des Ventils (34) verbunden ist. Das Ventil (34) weist ebenfalls zwei weitere Druckmittelanschlüsse auf, von denen einer mit der Druckmittelquelle (2) und der andere mit der Atmosphäre verbunden ist und als Entlüftung dient. Der Druckmittel-Steuereingang des Einlaß-/Auslaß-Ventils (31) ist mit einem ersten Druckmittelanschluß des Ventils (33) verbunden. Das Ventil (33) weist außerdem zwei weitere Druckmittelanschlüsse auf, von denen einer mit der Druckmittelquelle (2) und der andere mit einem ersten Druckmittelanschluß des Ventils (35) verbunden ist. Das Ventil (35) weist ebenfalls zwei weitere Druckmittelanschlüsse auf, von denen einer mit der Druckmittelquelle (2) und der andere mit der Atmosphäre verbunden ist und als Entlüftung dient.

Die Steuerung der Niveaulage durch geeignete Beaufschlagung der elektrisch betätigbaren Ventileinrichtung (32, 33) erfolgt wie bereits zu der Fig. 1 beschrieben.

Hierbei wirken die Ventile (32, 33) der elektrisch betätigbaren Ventileinrichtung jeweils als Vorsteuerventile für die Ventile (30, 31). Bei elektrischer Betätigung eines der Ventile (30, 31) erfolgt eine Druckluftbeaufschlagung des jeweils angeschlossenen Druckmittel-Steuereingangs der Ventile (30, 31). Ohne die elektrische Betätigung erfolgt eine Entlüftung des jeweils angeschlossenen Druckmittel-Steuereingangs der Ventile (30, 31) über die jeweilige Entlüftung der Ventile (34, 35). Für die manuelle Betätigung ist, ebenfalls wie bereits zu der Fig. 1 beschrieben, für eine Belüftung der Luftfederbälge (3) der Taster (18) manuell zu betätigen, für eine Entlüftung ist der Taster (19) manuell zu betätigen. Hierbei wirken die Ventile (34, 35) ebenfalls jeweils als Vorsteuerventile für die Ventile (30, 31), wobei die Druckluft durch die dann in Durchlaßstellung geschalteten Ventile (32, 33) strömt. Bei einer Belüftung der Luftfederbälge (3) strömt Druckluft von der Druckluftquelle (2) über die Druckluftleitungen (13, 15, 17) zu den Luftfederbälgen (3). Bei einer Entlüftung strömt die Druckluft von den Luftfederbälgen (3) über die Druckluftleitung (17) über einen Entlüftungsanschluß des Einlaß-/Auslaß-Ventils (31) in die Atmosphäre.

In der Fig. 4 ist eine weitere vorteilhafte Ausgestaltung der erfindungsgemäßen Luftfederungseinrichtung dargestellt, wobei wie in der Fig. 3 nur der die Ventileinrichtungen betreffende Teil der elektronisch gesteuerten Niveauregelungseinrichtung (1) dargestellt ist. Die übrigen Teile der Luftfederungseinrichtung entsprechen der Fig. 1.

In der Ausgestaltung gemäß Fig. 4 ist als Servoventileinrichtung eine Relaisventileinrichtung (40) vorgesehen, welche die Eigenschaft hat, den an einem Drucksteuereingang (43) anliegenden Druck an einem Druckluftausgang (42) in gleicher Druckhöhe auszugeben. Zwecks Entlüftung von Druckluft aus den Luftfederbälgen (3) in die Atmosphäre weist die Relaisventileinrichtung (40) einen Entlüftungsanschluß auf. Zur Zufuhr von Druckluft zu den Luftfederbälgen (3) ist die Relaisventileinrichtung (40) mit einem Druckmitteleingangsanschluß (41) über die Druckluftleitung (13) mit der Druckmittelquelle (2) verbunden.

Die elektrisch betätigbare Ventileinrichtung weist gemäß Fig. 4 ein kombiniertes Belüften-/Halten-Ventil (44) auf, das als 3/2-Wegeventil ausgebildet ist, sowie ein Entlüftungsventil (45), das als 2/2-Wegeventil ausgebildet ist, welche jeweils über Elektromagnete (20, 21) von dem elektronischen Steuergerät (5) betätigbar sind. Die manuell betätigbare Ventileinrichtung weist analog zu der vorgenannten elektrisch betätigbaren Ventileinrichtung ebenfalls ein kombiniertes Belüften-/Halten-Ventil (46) auf, das als 3/2-Wegeventil ausgebildet ist, sowie ein Entlüftungsventil (47), das als 2/2-Wegeventil ausgebildet ist, welche jeweils durch die Taster (18, 19) manuell betätigbar sind. Das elektrisch betätigbare Belüften-/Halten-Ventil (44) sowie das manuell betätigbare Belüften-/Halten-Ventil (46) sind jeweils mit einem Druckmitteleingangsanschluß über die Druckluftleitung (13) mit der Druckmittelquelle (2) verbunden. Der Drucksteuereingang (43) der Relaisventileinrichtung (40) ist über das Entlüftungsventil (45), das Entlüftungsventil (47), das Belüften-/Halten-Ventil (46) sowie das Belüften-/Halten-Ventil (44) auf den Druckluftausgang (42) der Relaisventileinrichtung (40) zurückgeführt. Sofern alle Ventile der elektrisch betätigbaren Ventileinrichtung (44, 45) und der manuell betätigbaren Ventileinrichtung (46, 47) unbetätigt sind, wie in der Fig. 4 dargestellt, sind der Drucksteuereingang (43) und der Druckluftausgang (42) der Relaisventileinrichtung (40) miteinander verbunden. Damit führt die Relaiseinrichtung (40) eine Druckhaltefunktion aus, derart, daß der in der Druckluftleitung (17) vorliegende Druck gehalten wird.

Im Rahmen der Niveauregelungsfunktionen beaufschlagt das elektronische Steuergerät (5) über die elektrische Leitung (8) den Elektromagneten (20) zur Betätigung des Ventils (44), wenn eine Belüftung der Luftfederbälge (3) durchgeführt werden soll. Hierdurch wird Druckluft aus der Druckmittelquelle (2) auf den Drucksteuereingang (43) gegeben. Die Relaisventileinrichtung (40) versucht, den an dem Drucksteuereingang (43) vorliegenden Druck an dem Druckluftausgang (42) einzustellen, indem die Relaisventileinrichtung (40) Druckluft von dem Druckmitteleingangsanschluß (41) zu dem Druckluftausgang (42) durchläßt. Wenn eine Entlüftung der Luftfederbälge (3) durchgeführt werden soll, betätigt das elektronische Steuergerät (5) über die elektrische Leitung (9) den Elektromagneten (21) zur Betätigung des Ventils (45). Hierdurch wird der Drucksteuereingang (43) der Relaisventileinrichtung (40) mit dem Entlüftungsanschluß des Entlüftungsventils (45) und damit mit der Atmosphäre verbunden. Die Relaisventileinrichtung (40) versucht, den an dem Drucksteuereingang (43) vorliegenden Druck an dem Druckluftausgang (42) einzustellen, indem die Relaisventileinrichtung (40) Druckluft von den Luftfederbälgen (3) über den Entlüftungsanschluß der Relaisventileinrichtung (40) in die Atmosphäre ausströmen läßt.

Für eine manuelle Veränderung der Niveaulage ist zum Belüften der Luftfederbälge (3) der Taster (18) und zum Entlüften der Luftfederbälge (3) der Taster (19) manuell zu betätigen. Hierbei bewirkt die Betätigung des Tasters (18) ein Umschalten des Belüften-/Halten-Ventil (46), derart, daß der Drucksteuereingang (43) der Relaisventileinrichtung (40) mit der Druckmittelquelle (2) verbunden wird. Die Relaisventileinrichtung (40) versucht wiederum, den an dem Drucksteuereingang (43) vorliegenden Druck an dem Druckluftausgang (42) einzustellen, indem die Relaisventileinrichtung (40) Druckluft von dem Druckmitteleingangsanschluß (41) zu dem Druckluftausgang (42) durchläßt. Eine Betätigung des Tasters (19) bewirkt ein Umschalten des Entlüftungsventils (47), derart, daß der Drucksteuereingang (43) der Relaisventileinrichtung (40) mit dem Entlüftungsanschluß des Entlüftungsventils(47) verbunden wird. Die Relaisventileinrichtung (40) versucht wiederum, den an dem Drucksteuereingang (43) vorliegenden Druck an dem Druckluftausgang (42) einzustellen, indem die Relaisventileinrichtung (40) Druckluft von den Luftfederbälgen (3) über den Entlüftungsanschluß der Relaisventileinrichtung (40) in die Atmosphäre ausströmen läßt.

Gemäß einer vorteilhaften Ausgestaltung der Erfindung ist die Servoventileinrichtung (30, 31, 40) mechanisch mit dem manuellen Betätigungselement (18, 19) gekoppelt und über das manuelle Betätigungselement (18, 19) manuell betätigbar. Im Falle der Ausgestaltung der Servoventileinrichtung gemäß Fig. 3 können die manuellen Betätigungselemente jeweils mit den Ventilen (30, 31) mechanisch gekoppelt sein, d.h. die Taster (18) ist mit dem Ventil (30) und der Taster(19) ist mit dem Ventil (31) mechanisch gekoppelt. Im Falle der Ausgestaltung der Servoventileinrichtung gemäß Fig. 4 können die manuellen Betätigungselemente direkt mit der Relaisventileinrichtung (40) mechanisch gekoppelt sein, d.h. beispielsweise von entgegengesetzten Seiten auf einen in der Relaisventileinrichtung (40) vorgesehenen Relaiskolben mechanisch einwirken.

Gemäß einer vorteilhaften Weiterbildung der Erfindung ist die elektronisch gesteuerte Niveauregelungseinrichtung (1) zum Empfang wenigstens einer manuell vorzugebenden Eingangsgröße geeignet, wobei die Eingangsgröße auch bei vorhandener Stromversorgung der elektronisch gesteuerten Niveauregelungseinrichtung (1) über das manuelle Betätigungselement (18, 19) vorgebbar ist. Eine solche Eingangsgröße ist vorzugsweise eine manuell vorgegebene Niveaulage bzw. eine Niveaulagenveränderung gegenüber der bisher eingestellten Niveaulage. Dies hat den Vorteil, daß zu jeder Zeit dieselben Betätigungselemente für die Vorgabe der Eingangsgröße verwendet werden können, unabhängig davon, ob die Niveauregelungseinrichtung mit elektrischer Energie versorgt wird oder nicht. Zusätzliche Betätigungselemente wie etwa elektrische Tasten sind nicht notwendig. Hierdurch wird zudem eine einfache Art der Bedienung ermöglicht, da ein Bediener nicht darauf achten muß, je nach Zustand der Stromversorgung unterschiedlichen Bedienelemente zu betätigen.

Gemäß einer vorteilhaften Weiterbildung der Erfindung ist die elektronisch gesteuerte Niveauregelungseinrichtung (1) zum Empfang wenigstens eines Wegsignals von einem Wegsensor (22) sowie eines Drucksignals von einem Drucksensor (23) geeignet. Die Niveauregelungseinrichtung (1) bzw. das elektronische Steuergerät (5) wertet das Wegsignal und das Drucksignal fortwährend aus und erkennt anhand des Verlaufs dieser Signale, ob eine Eingangsgröße, etwa eine Niveaulagenveränderung, manuell vorgegeben wurde. In vorteilhafter Weise prüft das elektronische Steuergerät (5) dabei, ob sich bei im wesentlichen gleichbleibendem Drucksignal das Wegsignal verändert. Dies ist ein Indiz für eine manuell vorgegebene Veränderung der Niveaulage, bei der bei im wesentlichen gleichbleibendem Fahrzeuggewicht eine bestimmte Luftmenge aus den Luftfederbälgen (3) abgelassen wurde oder darin eingesteuert wurde. Da bei einer solchen manuellen Niveaulagenveränderung von einem Gleichbleiben der Beladung des Fahrzeuges und damit des Fahrzeuggewichts ausgegangen werden kann, ändert sich infolgedessen der Druck in den Luftfederbälgen (3) nicht, sondern durch eine Niveaulagenveränderung wird lediglich das darin gespeicherte Druckluftvolumen verändert. Erkennt das elektronische Steuergerät jedoch, daß sich das Drucksignal und das Wegsignal verändern, so ist dies ein Indiz dafür, daß die Beladung des Fahrzeugs geändert wurde. In diesem Fall wird von dem elektronischen Steuergerät (5) nicht auf eine manuell vorgegebene Eingangsgröße geschlossen.

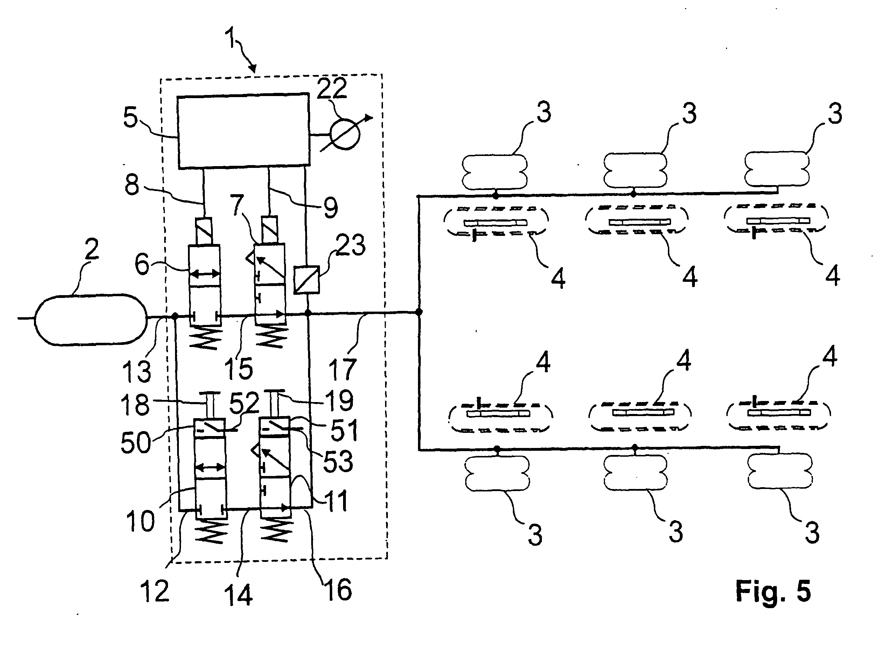

In der Fig. 5 ist eine weitere vorteilhafte Ausgestaltung der Erfindung dargestellt, die auch in Kombination mit den bereits erläuterten Ausgestaltungen der Erfindung vorteilhaft einsetzbar ist. Gemäß der Ausgestaltung der Fig. 5 ist das manuelle Betätigungselement, hier der Taster (18) mit einem elektrischen Signalgeber (50) mechanisch gekoppelt. Bei einer manuellen Betätigung des Betätigungselements (18) ist von dem elektrischen Signalgeber (50) ein elektrisches Signal abgebbar. Der elektrische Signalgeber (50), der beispielsweise als Schaltkontakt ausgebildet sein kann, ist über eine elektrische Leitung (52) mit dem elektronischen Steuergerät (5) verbunden. Des weiteren ist das weitere manuelle Betätigungselement, d. h. der Taster (19), des Ventils (11) mit einem weiteren elektrischen Signalgeber (51) mechanisch gekoppelt. Auch dieser weitere elektrische Signalgeber (51) gibt bei einer manuellen Betätigung des Betätigungselements (19) ein elektrisches Signal über eine Leitung (53) an das elektronische Steuergerät (5) ab.

Diese Ausgestaltung der Erfindung hat den Vorteil, daß die manuelle Betätigung der Taster (18, 19) auf einfache Weise und mit wenig zusätzlichem Aufwand von dem elektronischen Steuergerät (5) mittels elektrischer Signale erfaßbar ist. Eine Erfassung der manuellen Betätigung der Taster (18, 19) ist hierdurch auch dann möglich, wenn in der Luftfederungseinrichtung kein Drucksensor vorgesehen ist oder dieser defekt ist. Hierdurch können weitere Bedienelemente, wie z. B. eine separate Tastatur zum manuellen Eingriff zwecks Niveaulagenveränderung, entfallen.

Gemäß einer vorteilhaften Weiterbildung der Erfindung gibt bei geringer manueller Betätigung des Betätigungselements (18, 19) der jeweilige elektrische Signalgeber (50, 51) ein elektrisches Signal ab, und bei stärkerer manueller Betätigung des Betätigungselements (18, 19) wird der jeweilige manuell betätigbare Teil der Ventileinrichtung (6, 7, 10, 11, 34, 35, 46, 47) betätigt. Dies hat den Vorteil, daß im Falle einer über die Druckluftleitungen (13, 15, 17) durchgeführten Druckveränderung in den Luftfederbälgen (3) durch stärkere manuelle Betätigung der Taster (18, 19) der Druckluftzweig (12, 14, 16), der zu den Druckluftleitungen (13, 15, 17) parallel ist, hinzugeschaltet werden kann. Hierdurch wird bei manueller Niveaulagenveränderung ein größerer Durchströmquerschnitt für die Druckluft nutzbar, nämlich die Summe der Durchströmquerschnitte beider Druckluftzweige, so daß die manuelle Niveaulagenveränderung schneller durchgeführt werden kann.

Gemäß einer vorteilhaften Ausgestaltung der Erfindung kann statt zweier separater Taster (18, 19) auch ein von konventionellen Drehschieberventilen bekannter Drehhebel verwendet werden, der in einer Endstellung ein Belüften der Luftfederbälge (3) und in einer anderen Endstellung ein Entlüften der Luftfederbälge (3) bewirkt.

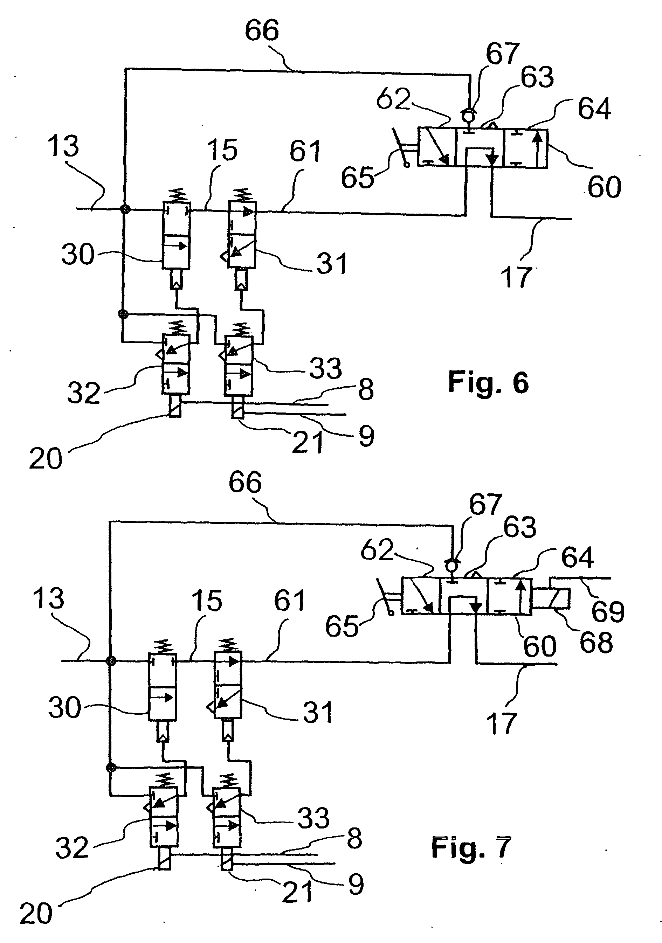

In den Fig. 6 und 7 sind weitere Ausgestaltungen der in der Fig. 1 dargestellten Luftfederungseinrichtung dargestellt, wobei in den Fig. 6 und 7 ausschnittsweise nur der die Ventileinrichtungen betreffende Teil der elektronisch gesteuerten Niveauregelungseinrichtung (1) dargestellt ist. Die übrigen Teile der Luftfederungseinrichtung entsprechen der Fig. 1.

Die Ausgestaltung gemäß Fig. 6 weist die anhand der Fig. 3 bereits erläuterte Servoventileinrichtung (30, 31) auf, die pneumatisch über elektrisch betätigbare 3/2-Wegeventile (32, 33) betätigbar ist. Die 3/2-Wegeventile (32, 33) sind, analog zu der Ausführungsform gemäß Fig. 3, von dem elektronischen Steuergerät (5) über elektrische Leitungen (8, 9) mittels Elektromagneten (20, 21) betätigbar. Im Unterschied zu der Darstellung gemäß Fig. 3 sind die Entlüftungsanschlüsse der Ventile (32, 33) jedoch nicht mit weiteren Ventilen verbunden, sondern direkt mit der Atmosphäre.

Für die manuelle Betätigung zum Belüften und/oder Entlüften der Luftfederbälge (3) ist ein als Drehschieberventil ausgebildetes Dreistellungsventil (60) vorgesehen, das in die pneumatische Verbindung zwischen der mit der Druckmittelquelle (2) verbundenen Druckluftleitung (13) und der mit den Luftfederbälgen (3) verbundenen Druckluftleitung (17) eingesetzt ist, z.B. zwischen dem Ventil (31) und der Druckluftleitung (17). Das Drehschieberventil (60) ist dabei über eine Druckluftleitung (61) mit dem Ventil (31) verbunden. Zur Zufuhr von Vorratsdruck ist das Drehschieberventil (60) des weiteren über eine Druckluftleitung (66) sowie ein Rückschlagventil (67) mit der Druckluftleitung (13) verbunden. Weiterhin weist das Drehschieberventil (60) einen Entlüftungsanschluß zur Atmospäre auf.

Das Drehschieberventil (60) ist über ein als Drehhebel ausgebildetes manuelles Betätigungselement (65) in die Stellungen "Heben" (62), "Neutral" (63) und "Senken" (64) betätigbar. In der Stellung "Heben" (62) wird die Druckluftleitung (13) mit der Druckluftleitung (17) verbunden, wodurch die Luftfederbälge (3) mit Druckluft befüllt werden. In der Stellung "Neutral" (63), wie in der Fig. 6 dargestellt, ist das Ventil (31) ausgangsseitig mit der Druckluftleitung (17) verbunden, so dass die Niveauregelungsfunktion ausgeübt werden kann. In der Stellung "Senken" (64) wird die Druckluftleitung (17) über einen Entlüftungsanschluss des Drehschieberventils (60) mit der Atmosphäre verbunden, wodurch die Luftfederbälge (3) entlüftet werden.

Die in der Fig. 7 dargestellte weitere Ausführungsform weist ein Drehschieberventil (60) mit integrierter, elektromagnetisch ausgelöster Rückstellfunktion auf. Hierfür ist das Drehschieberventil (60) mit einem Elektromagneten (68) versehen, welcher von dem elektronischen Steuergerät (5) über eine elektrische Leitung (69) betätigbar ist. Eine Betätigung des Elektromagneten (68) bewirkt eine mechanische Rückstellung des Drehschieberventils in die Stellung "Neutral" (63), unabhängig davon, in welche Stellung das Drehschieberventil (60) zuvor betätigt war. Hierüber kann das Steuergerät (5) beispielsweise das Drehschieberventil (60) automatisch zurück in die Stellung "Neutral" schalten, wenn das Fahrzeug in Bewegung gesetzt wird.

Der Fachmann erkennt, dass anstelle des als Beispiel dargestellten Drehschieberventils (60) auch andere Ventilbauformen mit den Stellungen "Heben", "Neutral" und "Senken" verwendet werden können.

## Patentansprüche

1. Luftfederungseinrichtung für ein Fahrzeug mit Luftfederbälgen (3) und mit einer elektronisch gesteuerten Niveauregelungseinrichtung (1), welche über eine elektrisch betätigbare Ventileinrichtung (6, 7, 32, 33, 44, 45) bei Bedarf ein Belüften oder Entlüften der Luftfederbälge (3) bewirkt, wobei wenigstens ein manuelles Betätigungselement (18, 19, 65) vorgesehen ist, durch dessen manuelle Betätigung auch bei fehlender Stromversorgung der elektronisch gesteuerten Niveauregelungseinrichtung (1) eine Belüftung und/oder Entlüftung der Luftfederbälge (3) durchführbar ist, **dadurch gekennzeichnet, daß** die elektronisch gesteuerte Niveauregelungseinrichtung (1) zum Empfang wenigstens einer manuell vorzugebenden Eingangsgröße geeignet ist, wobei die Eingangsgröße auch bei vorhandener Stromversorgung der elektronisch gesteuerten Niveauregelungseinrichtung (1) über das manuelle Betätigungselement (18, 19, 65) vorgebbar ist.

2. Luftfederungseinrichtung nach Anspruch 1, **dadurch gekennzeichnet, daß** in einem zu der elektrisch betätigbaren Ventileinrichtung (6, 7, 32, 33, 44, 45) parallelen, die elektrisch betätigbare Ventileinrichtung (6, 7, 32, 33, 44, 45) umgehenden Druckluftzweig (12, 14, 16) eine über das manuelle Betätigungselement (18, 19) manuell betätigbare Ventileinrichtung (10, 11) vorgesehen ist.

3. Luftfederungseinrichtung nach Anspruch 1, **dadurch gekennzeichnet, daß** die elektrisch betätigbare Ventileinrichtung (6, 7, 32, 33, 44, 45) mechanisch mit dem manuellen Betätigungselement (18, 19) gekoppelt ist und über das manuelle Betätigungselement (18, 19) manuell betätigbar ist.

4. Luftfederungseinrichtung nach Anspruch 1, **dadurch gekennzeichnet, daß** eine Servoventileinrichtung (30, 31, 40) zur Belüftung und/oder Entlüftung der Luftfederbälge (3) vorgesehen ist, wobei die Servoventileinrichtung (30, 31, 40) wenigstens durch die elektrisch betätigbare Ventileinrichtung (6, 7, 32, 33, 44, 45) und durch manuelle Betätigung des manuellen Betätigungselements (18, 19) betätigbar ist.

5. Luftfederungseinrichtung nach Anspruch 4, **dadurch gekennzeichnet, daß** die Servoventileinrichtung (30, 31, 40) mechanisch mit dem manuellen Betätigungselement (18, 19) gekoppelt ist und über das manuelle Betätigungselement (18, 19) manuell betätigbar ist.

6. Luftfederungseinrichtung nach wenigstens einem der vorhergehenden Ansprüche, **dadurch gekennzeichnet, dass** das manuelle Betätigungselement (65) zur Betätigung eines Dreistellungsventils (60), insbesondere eines Drehschieberventils, vorgesehen ist.

7. Luftfederungseinrichtung nach einem der vorherigen Ansprüche, **dadurch gekennzeichnet, daß** die elektronisch gesteuerte Niveauregelungseinrichtung (1) zum Empfang wenigstens eines Wegsignals von einem Wegsensor (22) und wenigstens eines Drucksignals von einem Drucksensor (23) geeignet ist, wobei die elektronisch gesteuerte Niveauregelungseinrichtung (1) anhand des Wegsignals und des Drucksignals erkennt, ob eine Eingangsgröße manuell vorgegeben wurde.

8. Luftfederungseinrichtung nach wenigstens einem der vorhergehenden Ansprüche, **dadurch gekennzeichnet, daß** das manuelle Betätigungselement (18, 19) als Taster ausgebildet ist.

9. Luftfederungseinrichtung nach wenigstens einem der vorhergehenden Ansprüche, **dadurch gekennzeichnet, daß** ein weiteres manuelles Betätigungselement vorgesehen ist, wobei eines (18) der manuellen Betätigungselemente zur Betätigung der Belüftung der Luftfederbälge (3) und das andere (19) manuelle Betätigungselement zur Betätigung der Entlüftung der Luftfederbälge (3) vorgesehen ist.

10. Luftfederungseinrichtung nach wenigstens einem der Ansprüche 1 bis 7, **dadurch gekennzeichnet, daß** das manuelle Betätigungselement (65) als Drehhebel ausgebildet ist.

11. Luftfederungseinrichtung nach wenigstens einem der vorhergehenden Ansprüche, **dadurch gekennzeichnet, daß** das manuelle Betätigungselement (18, 19, 65) mechanisch mit einem Wegeventil (6, 7, 10, 11, 34, 35, 46, 47, 60) gekoppelt ist.

12. Luftfederungseinrichtung nach wenigstens einem der vorhergehenden Ansprüche, **dadurch gekennzeichnet, daß** das manuelle Betätigungselement (18, 19, 65) mit wenigstens einem elektrischen Signalgeber (50, 51) mechanisch gekoppelt ist und bei einer manuellen Betätigung des Betätigungselements (18, 19, 65) von dem Signalgeber (50, 51) ein elektrisches Signal abgebbar ist.

13. Luftfederungseinrichtung nach Anspruch 12, **dadurch gekennzeichnet, daß** bei geringer manueller Betätigung des Betätigungselements (18, 19, 65) der elektrische Signalgeber (50, 51) ein elektrisches Signal abgibt und bei stärkerer manueller Betätigung des Betätigungselements (18, 19, 65) der manuell betätigbare Teil der Ventileinrichtung (6, 7, 10, 11, 34, 35, 46, 47, 60) betätigt wird.

14. Luftfederungseinrichtung nach wenigstens einem der vorhergehenden Ansprüche, **dadurch gekennzeichnet, daß** das manuelle Betätigungselement (18, 19) in demselben Gehäuse angeordnet ist wie die elektrisch betätigbare Ventileinrichtung (6, 7, 32, 33, 44, 45).

## Claims

1. Air suspension arrangement for a vehicle, having air suspension bellows (3) and having an electronically controlled level-regulating device (1) which, by way of an electrically actuatable valve device (6, 7, 32, 33, 44, 45), brings about, when required, introduction of air into the air suspension bellows (3) or venting of air therefrom, there being provided at least one manual actuation element (18, 19, 65), as a result of the manual actuation of which, even in the absence of a power supply to the electronically controlled level-regulating device (1), introducing air into the air suspension bellows (3) and/or venting air therefrom can be carried out, **characterised in that** the electronically controlled level-regulating device (1) is suitable for reception of at least one input variable to be input manually, it being possible for the input variable to be input by way of the manual actuation element (18, 19, 65) even when the power supply to the electronically controlled level-regulating device (1) is present.

2. Air suspension arrangement according to claim 1, **characterised in that** in a compressed air branch (12, 14, 16) parallel to the electrically actuatable valve device (6, 7, 32, 33, 44, 45) and by-passing the electrically actuatable valve device (6, 7, 32, 33, 44, 45) there is provided a valve device (10, 11) which is manually actuatable by way of the manual actuation element (18, 19).

3. Air suspension arrangement according to claim 1, **characterised in that** the electrically actuatable valve device (6, 7, 32, 33, 44, 45) is mechanically coupled to the manual actuation element (18, 19) and is manually actuatable by way of the manual actuation element (18, 19).

4. Air suspension arrangement according to claim 1, **characterised in that** a servo valve device (30, 31, 40) is provided for introducing air into the air suspension bellows (3) and/or venting air therefrom, the servo valve device (30, 31, 40) being actuatable at least by the electrically actuatable valve device (6, 7, 32, 33, 44, 45) and by manual actuation of the manual actuation element (18, 19).

5. Air suspension arrangement according to claim 4, **characterised in that** the servo valve device (30, 31, 40) is mechanically coupled to the manual actuation element (18, 19) and is manually actuatable by way of the manual actuation element (18, 19).

6. Air suspension arrangement according to at least one of the preceding claims, **characterised in that** the manual actuation element (65) is provided for actuation of a three-position valve (60), especially a rotary slide valve.

7. Air suspension arrangement according to one of the previous claims, **characterised in that** the electronically controlled level-regulating device (1) is suitable for reception of at least one spacing signal from a spacing sensor (22) and of at least one pressure signal from a pressure sensor (23), the electronically controlled level-regulating device (1) recognising from the spacing signal and pressure signal whether an input variable has been input manually.

8. Air suspension arrangement according to at least one of the preceding claims, **characterised in that** the manual actuation element (18, 19) is provided in the form of a button.

9. Air suspension arrangement according to at least one of the preceding claims, **characterised in that** a further manual actuation element is provided, one (18) of the manual actuation elements being provided for actuating introduction of air into the air suspension bellows (3) and the other (19) manual actuation element being provided for actuating venting of air from the air suspension bellows (3).

10. Air suspension arrangement according to at least one of claims 1 to 7, **characterised in that** the manual actuation element (65) is provided in the form of a rotary lever.

11. Air suspension arrangement according to at least one of the preceding claims, **characterised in that** the manual actuation element (18, 19, 65) is mechanically coupled to a directional valve (6, 7, 10, 11, 34, 35, 46, 47, 60).

12. Air suspension arrangement according to at least one of the preceding claims, **characterised in that** the manual actuation element (18, 19, 65) is mechanically coupled to at least one electrical signal transmitter (50, 51) and, on a manual actuation of the actuation element (18, 19, 65), an electrical signal is arranged to be emitted by the signal transmitter (50, 51).

13. Air suspension arrangement according to claim 12, **characterised in that,** on slight manual actuation of the actuation element (18, 19, 65), the electrical signal transmitter (50, 51) emits an electrical signal and, on greater manual actuation of the actuation element (18, 19, 65), the manually actuatable part of the valve device (6, 7, 10, 11, 34, 35, 46, 47, 60) is actuated.

14. Air suspension arrangement according to at least one of the preceding claims, **characterised in that** the manual actuation element (18, 19) is arranged in the same housing as the electrically actuatable valve device (6, 7, 32, 33, 44, 45).

## Revendications

1. Système de suspension pneumatique pour un véhicule, comprenant des coussins de ressort pneumatique (3) et un dispositif de régulation de niveau (1) à commande électronique, qui par l'intermédiaire d'un agencement de vannes (6, 7, 32, 33, 44, 45) à actionnement électrique produit, en cas de besoin, une alimentation en air ou une purge ou évacuation d'air des coussins de ressort pneumatique (3), système dans lequel il est prévu au moins un élément d'actionnement manuel (18, 19, 65) par l'actionnement manuel duquel il est possible d'effectuer, également en cas d'absence d'alimentation en courant électrique du dispositif de régulation de niveau (1) à commande électronique, une alimentation en air et/ou une évacuation d'air des coussins de ressort pneumatique (3),
**caractérisé en ce que** le dispositif de régulation de niveau (1) à commande électronique est adapté à la réception d'au moins une grandeur d'entrée à prescrire manuellement, la grandeur d'entrée pouvant également être prescrite par l'intermédiaire de l'élément d'actionnement manuel (18, 19, 65) en présence de l'alimentation en courant électrique du dispositif de régulation de niveau (1) à commande électronique.

2. Système de suspension pneumatique selon la revendication 1, **caractérisé en ce que** dans une branche d'air comprimé (12, 14, 16) en parallèle à l'agencement de vannes (6, 7, 32, 33, 44, 45) à actionnement électrique, et contournant l'agencement de vannes (6, 7, 32, 33, 44, 45) à actionnement électrique, est prévu un agencement de vannes (10, 11) pouvant être actionné manuellement par l'intermédiaire de l'élément d'actionnement manuel (18, 19).

3. Système de suspension pneumatique selon la revendication 1, **caractérisé en ce que** l'agencement de vannes (6, 7, 32, 33, 44, 45) à actionnement électrique est couplé mécaniquement avec l'élément d'actionnement manuel (18, 19) et peut être actionné manuellement par l'intermédiaire de l'élément d'actionnement manuel (18, 19).

4. Système de suspension pneumatique selon la revendication 1, **caractérisé en ce qu'**il est prévu un agencement de servo-vannes (30, 31, 40) pour l'alimentation en air et/ou l'évacuation d'air des coussins de ressort pneumatique (3), l'agencement de servo-vannes (30, 31, 40) pouvant être actionné au moins par l'agencement de vannes (6, 7, 32, 33, 44, 45) à actionnement électrique et par actionnement manuel de l'élément d'actionnement manuel (18, 19).

5. Système de suspension pneumatique selon la revendication 4, **caractérisé en ce que** l'agencement de servo-vannes (30, 31, 40) est couplé mécaniquement avec l'élément d'actionnement manuel (18, 19) et peut être actionné manuellement par l'intermédiaire de l'élément d'actionnement manuel (18, 19).

6. Système de suspension pneumatique selon l'une au moins des revendications précédentes, **caractérisé en ce que** l'élément d'actionnement manuel (65) est prévu pour l'actionnement d'une vanne à trois positions (60), notamment d'une vanne à tiroir rotatif.

7. Système de suspension pneumatique selon l'une des revendications précédentes, **caractérisé en ce que** le dispositif de régulation de niveau (1) à commande électronique est adapté à la réception d'au moins un signal de déplacement d'un capteur de déplacement (22) et d'au moins un signal de pression d'un capteur de pression (23), le dispositif de régulation de niveau (1) à commande électronique étant en mesure de reconnaître au regard du signal de déplacement et du signal de pression, si une grandeur d'entrée a été prescrite manuellement.

8. Système de suspension pneumatique selon l'une au moins des revendications précédentes, **caractérisé en ce que** l'élément d'actionnement manuel (18, 19) est réalisé sous forme de poussoir.

9. Système de suspension pneumatique selon l'une au moins des revendications précédentes, **caractérisé en ce qu'**il est prévu un autre élément d'actionnement manuel, l'un (18) des éléments d'actionnement manuel étant prévu pour l'actionnement de l'alimentation en air des coussins de ressort pneumatique (3), et l'autre élément d'actionnement manuel (19) pour l'actionnement de l'évacuation d'air des coussins de ressort pneumatique (3).

10. Système de suspension pneumatique selon l'une au moins des revendications 1 à 7, **caractérisé en ce que** l'élément d'actionnement manuel (65) est réalisé sous forme de levier rotatif.

11. Système de suspension pneumatique selon l'une au moins des revendications précédentes, **caractérisé en ce que** l'élément d'actionnement manuel (18, 19, 65) est couplé mécaniquement avec une vanne de type distributeur (6, 7, 10, 11, 34, 35, 46, 47, 60).

12. Système de suspension pneumatique selon l'une au moins des revendications précédentes, **caractérisé en ce que** l'élément d'actionnement manuel (18, 19, 65) est couplé mécaniquement avec au moins un générateur de signal électrique (50, 51), et le générateur de signal (50, 51) peut délivrer un signal électrique dans le cas d'un actionnement manuel de l'élément d'actionnement (18, 19, 65).

13. Système de suspension pneumatique selon la revendication 12, **caractérisé en ce que** pour un faible actionnement manuel de l'élément d'actionnement (18, 19, 65), le générateur de signal électrique (50, 51) délivre un signal électrique, et pour un actionnement manuel plus fort de l'élément d'actionnement (18, 19, 65), la partie manuellement actionnable de l'agencement de vannes (6, 7, 10, 11, 34, 35, 46, 47, 60) est actionnée.

14. Système de suspension pneumatique selon l'une au moins des revendications précédentes, **caractérisé en ce que** l'élément d'actionnement manuel (18, 19) est placé dans le même carter que l'agencement de vannes (6, 7, 32, 33, 44, 45) à actionnement électrique.
